(19) Europäisches Patentamt
European Patent Office
Office européen des brevets

(11) **EP 4 371 688 A1**

(12) **EUROPEAN PATENT APPLICATION**
published in accordance with Art. 153(4) EPC

(43) Date of publication:
**22.05.2024   Bulletin 2024/21**

(21) Application number: **22880794.7**

(22) Date of filing: **29.09.2022**

(51) International Patent Classification (IPC):
**B23K 11/16** $^{(2006.01)}$     **B23K 11/11** $^{(2006.01)}$
**B23K 11/24** $^{(2006.01)}$     **C21D 9/50** $^{(2006.01)}$
**C22C 38/00** $^{(2006.01)}$     **C22C 38/58** $^{(2006.01)}$

(52) Cooperative Patent Classification (CPC):
**B23K 11/11; B23K 11/16; B23K 11/24; C21D 9/50; C22C 38/00; C22C 38/58**

(86) International application number:
**PCT/JP2022/036460**

(87) International publication number:
**WO 2023/063098 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.10.2021   JP 2021167372**

(71) Applicant: **JFE Steel Corporation**
**Tokyo 100-0011 (JP)**

(72) Inventors:
• **ENDO Reiko**
  **Tokyo 100-0011 (JP)**
• **TAKASHIMA Katsutoshi**
  **Tokyo 100-0011 (JP)**
• **MATSUDA Hiroshi**
  **Tokyo 100-0011 (JP)**

(74) Representative: **Haseltine Lake Kempner LLP**
**Bürkleinstrasse 10**
**80538 München (DE)**

(54) **RESISTANCE SPOT-WELDED JOINT AND RESISTANCE SPOT WELDING METHOD THEREFOR**

(57)    It is an object to provide a resistance spot welded joint and a resistance spot welding method therefor. The present invention is a resistance spot welded joint having a resistance spot weld formed by resistance-spot-welding two or more steel sheets including at least one high strength steel sheet. The high strength steel sheet has a specific chemical composition. The hardness Hv1 of a first region of a heat-affected zone and the hardness Hmv of martensite in a nugget as a whole satisfy the relation $Hv1 \leq 0.78 \times Hmw$, and the hardness Hv2 of a second region of the heat-affected zone and the hardness Hv1 of the first region satisfy the relation $Hv2 \geq 1.10 \times Hv1$. The hardness Hv3 of a third region of the heat-affected zone and the hardness Hv2 of the second region satisfy the relation $Hv3 \leq 0.90 \times Hv2$.

FIG. 1

EP 4 371 688 A1

**Description**

Technical Field

The present invention relates to a resistance spot welded joint and a resistance spot welding method therefor.

Background Art

In recent years, various high strength steel sheets (high tensile strength steel sheets) are being increasingly used for automobile bodies, from the viewpoint of achieving a weight reduction to thereby improve fuel efficiency and from the viewpoint of achieving crash safety. In automobile assembly lines, resistance spot welding is mainly used to join components.

The joint strength of a resistance spot weld joined by resistance spot welding is evaluated using tensile shear strength (TSS) that is the tensile strength of the joint in a shear direction and cross tension strength (CTS) that is the tensile strength in a peeling direction. Although the TSS of a resistance spot weld tends to increase as the tensile strength of the base material increases, in some cases, the CTS decreases when the tensile strength of the base material is 780 MPa or more. As the CTS of a resistance spot weld (weld) decreases, the mode of failure of the weld changes from plug failure in which ductile fracture occurs in the heat-affected zone (HAZ) or the base material around the resistance spot weld to partial plug failure or interface failure in which brittle fracture occurs in the nugget. The cause of the reduction in the CTS may be, for example, brittle fracture that occurs due to hardening of an edge portion of the nugget by quenching. To solve the above problem, various studies have been conducted on a secondary energization method in which energization is performed again after primary energization.

Examples of the technique for solving the foregoing problem include those disclosed in Patent Literature 1 to Patent Literature 3. Patent Literature 1 discloses that a spot weld in a welded member includes a softest portion whose hardness is smallest in a heat-affected zone and a nugget central portion. In Patent Literature 1, a region formed of tempered martensite and located between the nugget central portion and the softest portion and the hardness of this region are specified.

Patent Literature 2 discloses a resistance spot welded joint in which the hardness outside the nugget and the microstructure inside the nugget are specified. In the resistance spot weld in this resistance spot welded joint, the microstructure of the nugget is an equiaxed martensite microstructure, and a soft region whose hardness is lower than that of the base material is present outside the nugget.

Patent Literature 3 discloses a spot-welded joint in which the average diameter and number density of carbide particles included in the microstructure of a nugget edge portion of a tempered weld are specified.

Citation List

Patent Literature

    PTL 1: Japanese Patent No. 5713147
    PTL 2: Japanese Patent No. 5895430
    PTL 3: Japanese Patent No. 5043236

Summary of Invention

Technical Problem

In Patent Literature 1, the region formed of tempered martensite is present between the nugget central portion and the softest portion of the heat-affected zone, and the Vickers hardness of this region is equal to or less than 120% with the Vickers hardness of the softest portion set to 100%. In this technique, the presence of this region causes the toughness of the nugget edge portion to decrease, so that fracture occurs within the nugget to thereby improve the peel strength. Specifically, although Patent Literature 1 discloses the improvement in the toughness due to the reduction in Vickers hardness, it is not clearly stated how the hardnesses of different regions affect fracture. However, in the present invention, it is unnecessary that the region formed of tempered martensite and having the Vickers hardness as described in Patent Literature 1 be present in the spot weld. In the present invention, the hardness in the heat-affected zone varies continuously from an edge portion of the nugget toward the base material, and it is necessary that the hardness in the heat-affected zone be appropriately distributed so as to form a soft region, a hard region, and a soft region that are arranged in this order from the edge side of the nugget. In the technique of the invention, this hardness distribution allows cracks to be prevented from propagating into the nugget. Specifically, the technical idea of the invention differs from that of Patent Literature 1.

In the technique in Patent Literature 2, the microstructure inside the nugget is an equiaxed martensite microstructure, and the soft region whose hardness is lower than that of the base material is present outside the nugget, so that the CTS and TSS are improved. In the technique in Patent Literature 3, the microstructure of the nugget edge portion of the tempered weld is specified, and the tensile strength of the spot welded joint is thereby improved. However, in the present invention, the hardness in the heat-affected zone outside the nugget is distributed so as to form a soft region, a hard region, and a soft region in this order as described above, so that cracks are caused to propagate through the outside of the nugget. In the present invention, the microstructure inside the nugget is not affected. Specifically, the technical idea of the invention differs from those of Patent Literature 2 and Patent Literature 3.

As described above, the spot welding method in which high strength steel sheets having a tensile strength of 780 MPa or more and containing C in an amount of 0.05 to 0.6% by mass are welded only by single energization has the problem of reduction in CTS, and there is a need to solve this problem.

The present invention has been made in view of the foregoing problem, and it is an object to provide a resistance spot welded joint having improved joint strengths (TSS and CTS) and formed by resistance-spot-welding a plurality of steel sheets including at least one high strength steel sheet and to provide a resistance spot welding method therefor.

Solution to Problem

In the present invention, to solve the foregoing problem, extensive studies have been conducted on the mechanism of the reduction in cross tension strength (CTS) in resistance spot welding using a sheet set including at least one high strength steel sheet and on a method for improving the cross tension strength (CTS).

As described above, as the strength of steel sheets increases, the CTS decreases. When the CTS is low, the failure mode changes from plug failure in which ductile fracture occurs in the heat-affected zone (HAZ) or the base material around the resistance spot weld to interface failure or partial plug failure in which brittle fracture occurs in the nugget. It is therefore difficult to ensure sufficient CTS in the high strength steel sheets.

The causes of the interface failure include (i) embrittlement of the edge portion of the nugget due to a hard microstructure formed by rapid cooling after the formation of the nugget and (ii) cracking in the nugget that is due to stress concentration in the hardened edge portion of the nugget and a reduction in toughness of the edge portion of the nugget and that causes interface failure. To prevent the brittle fracture, it is necessary to cause fracture to occur in the heat-affected zone.

Accordingly, in the present invention, additional studies have been conducted in order to improve the CTS of the resistance spot weld of the resistance spot welded joint using the high strength steel sheets described above, and the following findings have been obtained.

Specifically, in the resistance spot weld in a resistance spot welded joint including a high strength steel sheet, the hardness distribution in the heat-affected zone in the resistance spot weld is appropriately controlled such that a first region (softest region) having the softest microstructure, a second region (hardest region) having the hardest microstructure, and a third region (soft region) having a softened microstructure are disposed in this order from the edge side of the nugget.

As described above, the Vickers hardness of a region inside the heat-affected zone in the vicinity of the edge portion of the nugget (i.e., the first region) is smallest in the heat-affected zone. This allows the toughness of the heat-affected zone in the vicinity of the edge portion of the nugget to be improved. Moreover, stress in the edge portion of the nugget when a crack enters the edge portion of the nugget through the heat-affected zone is relaxed. Since these two effects are obtained, the mode of failure is plug failure, and the joint strength can be improved.

When a crack propagates from a sheet gap (sheet separation), first, the stress of the crack is relaxed by the soft region (i.e., the third region) in the heat-affected zone close to the base material. Then, since the hard region (i.e., the second region) is present between the soft region in the heat-affected zone and the edge portion of the nugget, the crack propagates through the sheet gap. However, since the stress of the crack is relaxed by the softest region in the vicinity of the edge portion of the nugget, the crack propagates through the outside of the nugget. Even if the crack enters the nugget slightly, the crack is unlikely to propagate inside the nugget because the toughness of the edge portion of the nugget is high. In this case, the mode of failure can be plug failure or partial plug failure in which a slight fracture occurs in the nugget.

Because of the operational effects described above, the CTS of the resistance spot welded joint is improved. Since the heat-affected zone has the hardness distribution described above, stress concentration in the vicinity of the edge portion of the nugget is relaxed when tensile shear strength is evaluated. Moreover, it has been found that, since the heat-affected zone has the hard region (second region), cracks do not propagate into the nugget and fracture occurs in the hard region, so that the TSS of the resistance spot welded joint is also improved.

The present invention is based on the above findings and summarized as follows.

[1] A resistance spot welded joint having a resistance spot weld formed by resistance-spot-welding two or more overlapping steel sheets including at least one high strength steel sheet,

wherein the high strength steel sheet has a chemical composition containing, in mass %,
C: 0.05 to 0.6%,
Si: 0.1 to 2.0%,
Mn: 1.5 to 4.0%,
P: 0.10% or less,
S: 0.003% or less,
N: 0.001 to 0.010%, and
O: 0.03% or less,
with the balance being Fe and incidental impurities,
wherein, in the resistance spot weld, two points at which a boundary of a nugget intersects a faying surface between two of the two or more overlapping steel sheets are defined as a first edge and a second edge, wherein a length of a line segment X connecting the first edge and the second edge is denoted as D (mm), wherein positions located on an extension of the line segment X within a heat-affected zone are denoted as points a, points b, and points c,
wherein a region in the heat-affected zone in which a distance L1 (mm) from the first edge to a first one of the points a and a distance L1 (mm) from the second edge to a second one of the points a satisfy a relation with the length D (mm) of the line segment X that is represented by formula (1) is defined as a first region, wherein a hardness Hv1 of the first region and a hardness Hmv of martensite in the nugget as a whole that is computed using formulas (2) and (8) satisfy a relation of formula (3),
wherein a region in the heat-affected zone in which distances L2 (mm) from the points a to the respective points b and the length D (mm) of the line segment X satisfy a relation of formula (4) is defined as a second region, wherein a hardness Hv2 of the second region and the hardness Hv1 of the first region satisfy a relation of formula (5),
wherein a region in the heat-affected zone in which distances L3 (mm) from the points b to the respective points c and the length D (mm) of the line segment X satisfy a relation of formula (6) is defined as a third region, and wherein a hardness Hv3 of the third region and the hardness Hv2 of the second region satisfy a relation of formula (7),

[Math. 1]

$$0 < L1 \leq 0.13 \times D \qquad (1)$$

$$Hmw = 884 \times Cw \times (1 - 0.3 \times Cw^2) + 294 \qquad (2)$$

$$Hv1 \leq 0.78 \times Hmw \qquad (3)$$

$$0.13 \times D < L2 \leq 0.15 \times D \qquad (4)$$

$$Hv2 \geq 1.10 \times Hv1 \qquad (5)$$

$$0.15 \times D < L3 \leq 0.25 \times D \qquad (6)$$

$$Hv3 \leq 0.90 \times Hv2 \qquad (7)$$

$$Cw = \frac{\sum\limits_{i=n} C_i V_i}{\sum\limits_{i=n} V_i} \quad \cdots (8)$$

wherein, in formulas (2) and (8),
Cw (% by mass): a content of C per unit volume of the steel sheets in the nugget,
$C_i$ (% by mass): a content of C in one of the overlapping steel sheets,

$V_i$ (mm$^2$): a melted area of one of the steel sheets in a region surrounded by the boundary of the nugget and the line segment X in a thicknesswise cross section passing through a center of the nugget, and

n: the number of overlapping steel sheets,

provided that, when a gap is present between the two of the two or more steel sheets at the faying surface, the first edge and the second edge are two points at which the boundary of the nugget intersects a straight line Y that is located midway in the gap and that is parallel to the faying surface.

[2] The resistance spot welded joint according to [1], wherein the chemical composition of the high strength steel sheet further contains, in mass %, one or two or more selected from

Al: 2.0% or less,
B: 0.0001 to 0.005%,
Ca: 0.005% or less,
Cr: 1.0% or less,
Cu: 0.005 to 1.0%,
Ni: 1.0% or less,
Mo: 0.005 to 1.0%,
Ti: 0.003 to 0.20%,
V: 0.005 to 0.50%, and
Nb: 0.003 to 0.100%.

[3] The resistance spot welded joint according to [1] or [2], wherein the high strength steel sheet includes a coated layer on a surface thereof.

[4] A resistance spot welding method for the resistance spot welded joint according to any one of [1] to [3], the resistance spot weld being formed by holding, between a pair of welding electrodes, a sheet set including the two or more overlapping steel sheets including the at least one high strength steel sheet and then energizing the sheet set under application of pressure,

wherein the energizing includes a primary energization step and a post-weld tempering heat treatment step,

wherein, in the primary energization step, the sheet set is energized at a current value $I_m$ (kA) to form the nugget,

wherein the post-weld tempering heat treatment step includes the following processes performed in the following order:

a cooling process in which a non-energization state is maintained for a cooling time $t_c$ (ms) shown in formula (9);

a heating process in which the resistance spot weld is energized at a current value $I_{t1}$ (kA) shown in formula (10) for an energization time $t_{t1}$ (ms) shown in formula (11); and

a transition process in which the resistance spot weld is energized in a downslope manner in which a current value is continuously reduced from a current value $I_{t2}$ (kA) at a start of the energization shown in formula (12) to a current value $I_{t3}$ (kA) at an end of the energization shown in formula (13) for an energization time $t_{t2}$ (ms) shown in formula (14),

$$800 \leq t_c, \quad (9)$$

$$I_m < I_{t1} < 2.0 \times I_m, \quad (10)$$

$$0 < t_{t1} \leq 400, \quad (11)$$

$$I_{t2} < I_{t1}, \quad (12)$$

$$I_{t3} < I_{t2}, \quad (13)$$

$$20 \leq t_{t2} \leq 3500. \quad (14)$$

Advantageous Effects of Invention

The present invention can provide a resistance spot welded joint having improved joint strengths (TSS and CTS) and a resistance spot welding method therefor.

Brief Description of Drawings

[Fig. 1] Fig. 1 is a cross-sectional view schematically showing the vicinity of a resistance spot weld of a resistance spot welded joint according to an embodiment of the invention.
[Fig. 2] Fig. 2 is a cross-sectional view schematically showing the vicinity of a resistance spot weld of a resistance spot welded joint according to another embodiment of the invention.
[Fig. 3] Fig. 3 is a cross-sectional view schematically showing the vicinity of a resistance spot weld of a resistance spot welded joint according to another embodiment of the invention.
[Fig. 4] Fig. 4 is a cross-sectional view illustrating an example of the resistance spot welding method of the invention.
[Fig. 5] Fig. 5 is a graph showing an energization pattern in the resistance spot welding method of the invention.

Description of Embodiments

The present invention will next be described. However, the present invention is not limited to the following embodiments.

[Resistance spot welded joint]

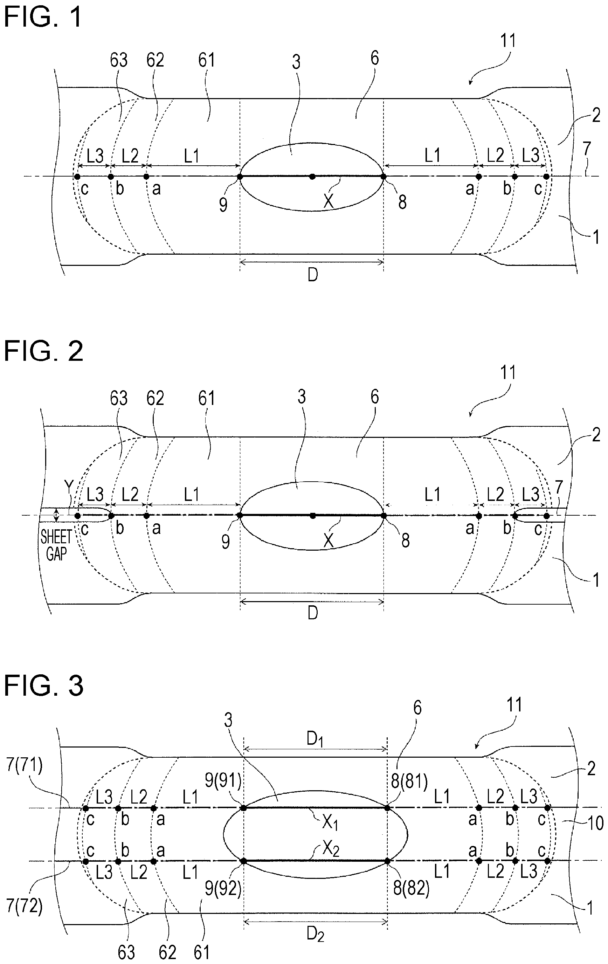

Referring first to Figs. 1 to 3, the resistance spot welded joint of the invention will be described. Figs. 1 to 3 show cross-sectional views illustrating examples of a resistance spot weld in the resistance spot welded joint of the invention and the vicinity thereof, the cross-sectional views being taken in the thickness direction. In Fig. 1, the number of overlapping steel sheets is two. In Fig. 2, the number of overlapping steel sheets is two, and a sheet gap is present between the steel sheets. In Fig. 3, the number of overlapping steel sheets is three.

The present invention is a resistance spot welded joint formed by resistance-spot-welding a plurality of overlapping steel sheets. The overlapping steel sheets include at least one high strength steel sheet described later. No particular limitation is imposed on the number of steel sheets described above, and it is only necessary that the number of steel sheets be two or more. The upper limit of the number of steel sheets is not particularly specified, but the number of steel sheets is preferably 4 or less.

Fig. 1 shows a resistance spot welded joint 11 formed by welding two overlapping steel sheets, and a high strength steel sheet is used for a steel sheet 1 disposed on the lower side and/or a steel sheet 2 disposed on the upper side. The high strength steel sheet may have a coated layer as described later. However, in Fig. 1, the illustration of the coated layer on the surface of the steel sheet is omitted. A resistance spot weld described below is formed on a steel sheet faying surface (faying surface) 7 between the steel sheets 1 and 2.

[Resistance spot weld]

The resistance spot weld in the resistance spot welded joint 11 of the invention will be described in detail. As shown in Fig. 1, the resistance spot weld (hereinafter referred to as the "weld") of the resistance spot welded joint 11 (hereinafter referred to as a "welded joint") includes a nugget 3 and a heat-affected zone (HAZ) 6. In the present invention, the hardness distribution in the heat-affected zone is specified as follow.

As shown in Fig. 1, two points at which the boundary of the nugget 3 intersects the faying surface 7 between the steel sheets 1 and 2 are defined as a first edge 8 and a second edge 9. The length of a line segment X connecting the first edge 8 to the second edge 9 is denoted as D (mm). Positions located on an extension of the line segment X within the heat-affected zone 6 are denoted as points a, points b, and points c. As shown in Fig. 1 etc., the points a, points b, and points c are present on respective sides of the nugget 3.

In the present invention, the distance from the first edge 8 to a first one of the points a and the distance from the second edge 9 to a second one of the points a are each denoted as L1 (mm), and a region (regions indicated by L1 in Fig. 1) in the heat-affected zone 6 in which the distance L1 and the length D (mm) of the line segment X satisfy the relation of formula (1) is defined as a "first region 61." The distances from the points a to the respective points b are each denoted as L2 (mm), and a region (regions indicated by L2 in Fig. 1) in the heat-affected zone 6 in which the distance L2 and the length D (mm) of the line segment X satisfy the relation of formula (4) is defined as a "second region 62." The distances from the points b to the respective points c are each denoted as L3 (mm), and a region (regions indicated by L3 in Fig. 1) in the heat-affected zone 6 in which the distance L3 and the length D (mm) of the line segment X satisfy the relation of formula (6) is defined as a "third region 63." As shown in Fig. 1, the first region 61, the second region 62, and the third region 63 are formed in this order from the edge portion side of the nugget.

$$0 < L1 \leq 0.13 \times D \qquad (1)$$

$$0.13 \times D < L2 \leq 0.15 \times D \qquad (4)$$

$$0.15 \times D < L3 \leq 0.25 \times D \qquad (6)$$

D in the above formulas represents the length of the line segment X.

In the present invention, the hardness Hv1 of the first region 61 on at least the faying surface 7 and the hardness Hmv of martensite in the nugget 3 as a whole that is computed using formulas (2) and (8) satisfy the relation of formula (3), and the hardness Hv2 of the second region 62 and the hardness Hv1 of the first region 61 satisfy the relation of formula (5). Moreover, the hardness Hv3 of the third region 63 and the hardness Hv2 of the second region 62 satisfy the relation of formula (7).

[Math. 2]

$$Hmw = 884 \times Cw \times (1 - 0.3 \times Cw^2) + 294 \qquad (2)$$

$$Hv1 \leq 0.78 \times Hmw \qquad (3)$$

$$Hv2 \geq 1.10 \times Hv1 \qquad (5)$$

$$Hv3 \leq 0.90 \times Hv2 \qquad (7)$$

$$Cw = \frac{\sum_{i=n} C_i V_i}{\sum_{i=n} V_i} \quad \cdots (8)$$

In formulas (2) and (8),

Cw (% by mass): the content of C per unit volume of the steel sheets in the nugget;
$C_i$ (% by mass): the content of C in one of the overlapping steel sheets;
Vi (mm$^2$): the melted area of one of the steel sheets in a region surrounded by the boundary of the nugget and the line segment X in a thicknesswise cross section passing through the center of the nugget; and
n: the number of overlapping steel sheets.

In the example shown in Fig. 1, the "melted area of one of the steel sheets in a region surrounded by the boundary of the nugget and the line segment X" is the sum of the area (melted area) of a thicknesswise cross section of a region (melted region) surrounded by the boundary line of the nugget 3 in the upper steel sheet 2 and the line segment X and the area (melted area) of a thicknesswise cross section of a region (melted region) surrounded by the boundary line of the nugget 3 in the lower steel sheet 1 and the line segment X.

The "content of C per unit volume of the steel sheets in the nugget" is the sum of the value of the C content per unit volume of the nugget 3 formed in the upper steel sheet 2 with respect to the C content per unit volume of the upper steel sheet 2 and the value of the C content per unit volume of the nugget 3 formed in the lower steel sheet 1 with respect to the C content per unit volume of the lower steel sheet 1.

The hardness distribution in the heat-affected zone 6 is the hardness distribution on the high strength steel sheet side in the invention. For example, when the high strength steel sheet in the invention is used only for the upper steel sheet 2 shown in Fig. 1, the hardness distribution in the heat-affected zone 6 in the steel sheet 2 is used.

When three or more steel sheets are stacked as shown in Fig. 3, first regions 61, second regions 62, and third regions 63 are provided for respective faying surfaces 71 and 72. When the above-described hardness distribution is formed in the first to third regions provided for at least any of the faying surfaces, the operational effects of the invention can be obtained.

When a gap is present between the steel sheets 1 and 2 at the faying surface 7 as shown in Fig. 2, two points at which the boundary of the nugget 3 intersects a straight line Y located midway in the gap and parallel to the faying surface 7 are defined as the first edge 8 and the second edge 9.

The first to third regions will next be described in detail.

[Hardness of first region of heat-affected zone]

The hardness Hv1 of the first region 61 and the hardness Hvm of martensite in the nugget as a whole that is computed using formulas (2) and (8) satisfy the relation of formula (3).

As described above, the first region 61 is a region having the softest microstructure.

The microstructure of the first region 61 is tempered martensite. When the first region 61 has this microstructure, stress concentration in the edge portion of the nugget can be relaxed. The area fraction of tempered martensite in the first region 61, which is the area fraction with respect to the total area of the first region 61, is preferably 50% or more and is preferably 100% or less.

The "hardness Hv1 of the first region 61" is the smallest value of the values of Vickers hardness measured in the first region 61 of the heat-affected zone 6 according to JIS Z 2244 (2020). Specifically, a measurement method described later in Examples is used. The measurement is performed at positions 0.2 mm above the faying surface between the steel sheets along a straight line parallel to the faying surface at intervals of 0.2 (mm) under the condition that an indenter load of 300 gf is maintained for 15 seconds. The measurement region is located within the first region 61. The smallest value of the measured values obtained is used as the "hardness Hv1 of the first region 61." As described above, in the present invention, the hardness distribution in the heat-affected zone on the high strength steel sheet side is specified. Therefore, for example, when the high strength steel sheet is used for the steel sheet 2 in the example shown in Fig. 1, the hardness is measured at "positions 0.2 mm above the faying surface between the steel sheets." Alternatively, when the high strength steel sheet is used for the lower steel sheet 1 in the example shown in Fig. 1, the hardness is measured at "positions 0.2 mm below the faying surface between the steel sheets." When the sheet set is composed of two overlapping high strength steel sheets of the same type, the hardness is measured using the upper steel sheet 2. When the sheet set is composed of two overlapping high strength steel sheets of different types, the hardness is measured on the lower-strength steel sheet.

The "hardness Hmw of martensite in the nugget as a whole that is computed using formulas (2) and (8)" is the hardness of martensite in the nugget that is computed based on the contents of carbon in the steel sheets.

If the hardness Hv1 of the first region 61 and the hardness Hmw of martensite in the nugget 3 as a whole do not satisfy the relation of formula (3), the microstructure of the first region 61 is a hardened microstructure, and therefore stress under a CTS load concentrates in the edge portion of the nugget. In this case, the stress in the edge portion of the nugget when a crack propagates from the heat-affected zone 6 into the edge portion of the nugget is not relaxed, and fracture occurs in the nugget 3, so that the CTS decreases. Therefore, the hardness Hv1 of the first region 61 is set to be equal to or less than 0.78 times the hardness Hvm of martensite in the nugget 3 as a whole. The hardness Hv1 is preferably equal to or less than 0.75 times the Hvm.

In the present invention, no particular limitation is imposed on the lower limit of the hardness Hv1 of the first region 61. The microstructure of the first region 61 is preferably tempered martensite, and the hardness of the tempered martensite (i.e., the hardness Hv1 of the first region 61) is preferably equal to or more than 0.30 times the hardness Hmw of martensite in the nugget 3 as a whole. The hardness Hv1 of the first region 61 is more preferably equal to or more than 0.35 times the Hmw and still more preferably equal to or more than 0.55 times the Hmw.

[Hardness of second region of heat-affected zone]

The hardness Hv2 of the second region 62 and the hardness Hv1 of the first region 61 satisfy the relation of formula (5).

As shown in Fig. 1 etc., the second region 62 is located outward of the first region 61. As described above, the second region 62 is a region having the hardest microstructure. The microstructure of the second region 62 includes martensite and ferrite. When the second region 62 has this microstructure, stress concentration in the nugget under a TSS load can be relaxed. The total area fraction of martensite and ferrite in the second region 62 with respect to the total area of the second region 62 is preferably 40% or more and is preferably 90% or less.

The "hardness Hv2 of the second region 62" is the highest value of the values of Vickers hardness measured in the second region 62 in the heat-affected zone according to JIS Z 2244 (2020). Specifically, a measurement method described later in Examples is used. The measurement is performed at positions 0.2 mm above the faying surface between the steel sheets along a straight line parallel to the faying surface at intervals of 0.2 (mm) under the condition that an indenter load of 300 gf is maintained for 15 seconds. The measurement region is located within the second region 62. The largest value of the measured values obtained is used as the "hardness Hv2 of the second region 62." As described above, in the present invention, the hardness distribution in the heat-affected zone on the high strength steel sheet side is measured.

If the hardness Hv2 of the second region 62 and the hardness Hv1 of the first region 61 do not satisfy the relation of formula (5), the tensile stress under a TSS load is not reduced, and a crack propagates into the nugget, so that the TSS decreases. Specifically, the presence of the second region 62 allows stress concentration in the nugget 3 under a TSS load to be relaxed. The concentration of the tensile stress under a CTS load is relaxed by the first region 61, and the influence of the second region 62 thereon is small. Therefore, the hardness Hv2 of the second region 62 is equal to or more than 1.10 times the hardness Hv1 of the first region 61. The hardness Hv2 is preferably equal to or more than 1.12 times the Hv1.

In the present invention, no particular limitation is imposed on the upper limit of the hardness Hv2 of the second region 62. If the difference in hardness between the first region 61 including tempered martensite that is most likely to be softened and the second region 62 including martensite that is most likely to be hardened is excessively large, stress concentration occurs in the second region 62, and it is feared that the stress may not be sufficiently relaxed by the first region 61. Therefore, the hardness Hv2 of the second region 62 is preferably equal to or less than 1.6 times the hardness Hv1 of the first region 61 and more preferably equal to or less than 1.5 times the Hv1.


[Hardness of third region of heat-affected zone]

The hardness Hv3 of the third region 63 and the hardness Hv2 of the second region 62 satisfy the relation of formula (7).

As shown in Fig. 1 etc., the third region 63 is located outward of the second region 62. As described above, the third region 63 is a region including a softened microstructure. The microstructure of the third region 63 includes ferrite, martensite, and tempered martensite. Since the third region 63 has the microstructure described above, stress concentration in the edge portion of the nugget under a CTS load and under a TSS load can be relaxed, and the improvement of the toughness in the vicinity of the edge portion of the nugget by tempering can be achieved. To obtain these effects, the area fraction of ferrite in the third region 63 with respect to the total area of the third region 63 is preferably 10% or more and is preferably 40% or less.

The total area fraction of the microstructures (martensite and tempered martensite) other than ferrite with respect to the total area of the third region 63 is preferably 90% or less and is preferably 60% or more.

The "hardness Hv3 of the third region 63" is the average of the values of Vickers hardness measured in the third region 63 of the heat-affected zone 6 according to JIS Z 2244 (2020). Specifically, a measurement method described later in Examples is used. The measurement is performed at positions 0.2 mm above the faying surface between the steel sheets along a straight line parallel to the faying surface at intervals of 0.2 (mm) under the condition that an indenter load of 300 gf is maintained for 15 seconds. The measurement region is located within the third region 63. The average of the measured values obtained is used as the "hardness Hv3 of the third region 63." As described above, in the present invention, the hardness distribution in the heat-affected zone on the high strength steel sheet side is measured.

If the hardness Hv3 of the third region 63 and the hardness Hv2 of the second region 62 do not satisfy the relation of formula (7), the stress under a TSS load concentrates in the edge portion of the nugget. The presence of the hardened region in the second region 62 allows the propagation behavior of a crack under a TSS load to be changed to the outside of the nugget. If the microstructure of the second region 62 is a softened microstructure, the stress under a TSS load concentrates inside the nugget, and the TSS decreases. Therefore, the hardness Hv3 of the third region 63 is equal to or less than 0.90 times the hardness Hv2 of the second region 62. The hardness Hv3 is preferably equal to or less than 0.87 times the Hv2 and more preferably equal to or less than 0.85 times the Hv2.

In the present invention, no particular limitation is imposed on the lower limit of the hardness Hv3 of the third region 63. From the viewpoint of controlling the area fraction of ferrite in the third region 63 within the above-described range, the hardness Hv3 of the third region 63 is preferably equal to or more than 0.30 times the hardness Hv2 of the second region 62 (i.e., equal to or more than (Hv2 $\times$ 0.30)) and more preferably equal to or more than 0.40 times the Hv2 (i.e., equal to or more than (Hv2 $\times$ 0.40)). The hardness Hv3 is more preferably equal to or more than 0.50 times the Hv2, still more preferably equal to or more than 0.55 times the Hv2, and yet more preferably equal to or more than 0.60 times the Hv2.

The relation between the hardness Hv3 of the third region 63 and the hardness Hv1 of the first region 61 is Hv1 < Hv3. In this case, the propagation path of cracks is not concentrated in the edge portion of the nugget but is guided to the outside of the nuggets, so that stress concentration in the edge portion of the nugget, which has the largest influence during a CTS load, can be most effectively avoided.

As for the relation with the hardness of the base material, it is preferable that the hardness Hv1 of the first region 61 and the hardness Hv3 of the third region 63 are lower than the hardness (Hvb) of the base material. Specifically, it is preferable that Hv1 < Hvb and Hv3 < Hvb. More preferably, Hv1 < (0.95 × Hvb), and Hv3 < (0.95 × Hvb). The hardness Hvb of the base material can be measured using a method described later in Examples.

[High strength steel sheet]

The reasons for the limitations on the chemical composition of the base material in the high strength steel sheet in the resistance spot welded joint of the invention will be described. In the following description, "%" in the chemical composition represents "% by mass" unless otherwise specified.

C: 0.05 to 0.6%

C is an element contributing to strengthening of the steel. If the content of C is less than 0.05%, the strength of the steel is low, and it is very difficult to produce a steel sheet having a tensile strength of 780 MPa or more. If the content of C exceeds 0.6%, although the strength of the steel sheet is high, the amount of hard martensite is excessively large, and the number of micro-voids increases. Moreover, the nugget and the heat-affected zone therearound are excessively hardened and also embrittled, and it is difficult to improve the CTS. Therefore, the content of C is 0.05 to 0.6%. The content of C is preferably 0.10% or more and is preferably 0.45% or less.

Si: 0.1 to 2.0%

When the content of Si is 0.1% or more, Si acts effectively to strengthen the steel. However, if the content of Si exceeds 2.0%, although the steel is strengthened, the toughness may be adversely affected. Therefore, the content of Si is 0.1 to 2.0%. The content of Si is preferably 0.9% or more and is preferably 1.8% or less.

Mn: 1.5 to 4.0%

If the content of Mn is less than 1.5%, high joint strength can be obtained even when a long cooling period used in the present invention is not applied. If the content of Mn exceeds 4.0%, the weld is embrittled, or significant cracking due to the embrittlement occurs, and it is therefore difficult to improve the joint strength. Therefore, the content of Mn is 1.5 to 4.0%. The content of Mn is preferably 2.0% or more and is preferably 3.5% or less.

P: 0.10% or less

P is an incidental impurity. If the content of P exceeds 0.10%, strong segregation occurs at the edge portion of the nugget of the weld, and it is therefore difficult to improve the joint strength. Therefore, the content of P is 0.10% or less. The content of P is preferably 0.05% or less and more preferably 0.02% or less. No particular limitation is imposed on the lower limit of the content of P. However, an excessive reduction in the content of P leads to an increase in cost. Therefore, the content of P is preferably 0.005% or more.

S: 0.003% or less

S is an incidental impurity. If the content of S exceeds 0.003%, segregation in a center segregation portion is significant, and the toughness decreases. It is therefore difficult to improve the joint strength. For the reason described above, the content of S is 0.003% or less. The content of S is preferably 0.002% or less. No particular limitation is imposed on the lower limit of the content of S. However, an excessive reduction in the content of S leads to an increase in cost. Therefore, the content of S is preferably 0.001% or more.

N: 0.001 to 0.010%

N is an element that causes deterioration in the aging resistance of the steel. Therefore, the content of N is 0.001 to 0.010%. The content of N is preferably 0.008% or less.

O: 0.03% or less

O (oxygen) is an element that forms non-metallic inclusions to cause deterioration in the cleanliness and toughness of the steel. Therefore, the content of O is preferably 0.03% or less. The content of O is more preferably 0.02% or less. The content of O is preferably 0.005% or more.

The high strength steel sheet used in the present invention contains the elements described above.

In the present invention, the chemical composition described above is the basic chemical composition of the high strength steel sheet. The balance may be Fe and incidental impurities. However, in the present invention, the chemical composition may further contain one or two or more optional elements selected from Al, B, Ca, Cr, Cu, Ni, Mo, Ti, V, and Nb.

The following elements Al, Ca, Cr, Ni, and O are optionally added, and the contents of these components may be 0%.

Al: 2.0% or less

Al is an element that allows control of the microstructure in order to obtain fine austenite grains. If the amount of Al added is excessively large, the toughness deteriorates. Therefore, when Al is contained, the content of Al is preferably 2.0% or less. The content of Al is more preferably 1.5% or less and is preferably 1.2% or more.

B: 0.0001 to 0.005%

B is an element that can improve the hardenability of the steel to thereby strengthen the steel. However, even if a large amount of B is added, its effect is saturated, and therefore the upper limit of B is set to 0.005%. When B is contained, the content of B is preferably 0.0001 to 0.005%. The content of B is more preferably 0.0007% or more and is more preferably 0.0010% or less.

Ca: 0.005% or less

Ca is an element that can contribute to an improvement in the workability of the steel. However, if a large amount of Ca is added, the toughness deteriorates. Therefore, when Ca is contained, the content of Ca is preferably 0.005% or less. The content of Ca is more preferably 0.004% or less and is preferably 0.001% or more.

Cr: 1.0% or less

Cr is an element that can improve the hardenability to thereby improve the strength. However, if the content of Cr is excessively large, i.e., more than 1.0%, the toughness of the HAZ may deteriorate. Therefore, when Cr is contained, the content of Cr is preferably 1.0% or less. The content of Cr is more preferably 0.8% or less and is preferably 0.01% or more.

Cu: 0.005 to 1.0%, Ni: 1.0% or less, and Mo: 0.005 to 1.0%

Cu, Ni, and Mo are elements that can contribute to an improvement in the strength of the steel. However, if large amounts of Cu, Ni, and Mo are added, the toughness deteriorates. Therefore, when these elements are contained, the content of Cu is preferably 0.005 to 1.0%, and the content of Ni is preferably 1.0% or less. Moreover, the content of Mo is preferably 0.005 to 1.0%. The content of Cu is more preferably 0.8% or less and is preferably 0.006% or more. The content of Ni is more preferably 0.8% or less and is preferably 0.01% or more. The content of Mo is more preferably 0.8% or less and is preferably 0.006% or more.

Ti: 0.003 to 0.20%

Ti is an element that can improve the hardenability of the steel to thereby strengthen the steel. However, if a large amount of Ti is added, carbide is formed, and the precipitation hardening causes the toughness to deteriorate significantly. Therefore, when Ti is contained, the content of Ti is preferably 0.003 to 0.20%. The content of Ti is more preferably 0.15% or less and is more preferably 0.004% or more.

V: 0.005 to 0.50% and Nb: 0.003 to 0.100%

V and Nb are elements that allow control of the microstructure through precipitation hardening to thereby strengthen the steel. However, a large amount of V and a large amount of Nb contained may lead to deterioration of the toughness of the heat-affected zone. Therefore, when V and Nb are contained, the content of V is preferably 0.005 to 0.50%, and the content of Nb is preferably 0.003 to 0.100%. The content of V is more preferably 0.30% or less and is more preferably 0.006% or more. The content of Nb is more preferably 0.090% or less and still more preferably 0.080% or less. The content of Nb is more preferably 0.005% or more.

The high strength steel sheet having the above-described chemical composition may have a tensile strength of 780 MPa or more. The tensile strength of the high strength steel sheet is preferably 1180 MPa or more.

In particular, when the tensile strength of the base material is 780 MPa or more as described above, the CTS may decrease. In the present invention, when the tensile strength of the high strength steel sheet is 780 MPa or more, the toughness of the heat-affected zone in the vicinity of the edge portion of the nugget is improved because the heat-affected zone has the specific hardness distribution. In this case, when a CTS load is applied, the toughness in the vicinity of the edge portion of the nugget can be improved, and stress concentration in the soft regions (the first region 61 and the third region 63) can be relaxed. When a TSS load is applied, the presence of the hard region (the second region 62) allows stress concentration in the nugget to be relaxed. Therefore, when a CTS load or a TSS load is applied, the weld can fracture in the heat-affected zone. Specifically, in a CTS test, fracture occurs in the soft regions, so that the nugget can remain. In a TSS test, cracks propagate through the hard region, so that the nugget can remain. In other words, since the toughness in the vicinity of the edge portion of the nugget is high and the hardness distribution in the heat-affected zone is appropriately controlled, brittle fracture of the edge portion of the nugget can be prevented. Naturally, with a high strength steel sheet having a tensile strength or less than 780 MPa, the above effects can be obtained.

[Type of coating on high strength steel sheet]

The high strength steel sheet in the invention may be subjected to galvanizing treatment to form a steel sheet having a galvanized layer on the surface thereof (a galvanized steel sheet). Even in this case, the above effects can be obtained. The galvanized layer is a coated layer containing zinc as a main component. The coated layer containing zinc as a main component may be a well-known galvanized layer, and examples of the coated layer containing zinc as a main component include a hot-dip galvanized layer, an electrogalvanized layer, a Zn-Al coated layer, and a Zn-Ni layer. The high strength steel sheet in the invention may be a galvannealed steel sheet formed by subjecting the steel sheet to the galvanizing treatment and then to galvannealing treatment to thereby form a galvannealed layer on the surface of the base material.

In the present invention, the overlapping steel sheets may be a plurality of overlapping steel sheets of the same type or a plurality of overlapping steel sheets of different types. A steel sheet having a galvanized layer on the surface thereof (a surface-treated steel sheet) and a steel sheet having no galvanized layer on the surface thereof (a cold rolled steel sheet) may be disposed so as to overlap each other. The thicknesses of the steel sheets may be the same or different, and no problem arises in either case. From the viewpoint of applying the steel sheets to general automobile steel sheets, the thicknesses of the steel sheets are, for example, preferably 0.4 mm to 2.2 mm.

[Resistance spot welding method]

Next, an embodiment of a resistance spot welding method for producing the welded joint of the invention including the weld described above will be described.

The welded joint of the invention can be produced by resistance spot welding in which a sheet set including two or more overlapping steel sheets including at least one high strength steel sheet described above is held between a pair of welding electrodes and joined together by energizing the sheet set under the application of pressure.

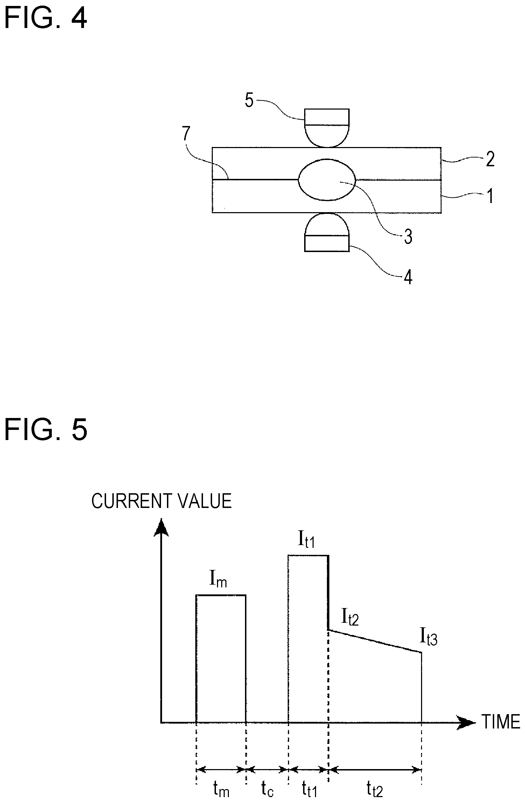

For example, as shown in Fig. 4, two steel sheets 1 and 2 are disposed so as to overlap each other to thereby form a sheet set. Next, the sheet set is held between a pair of welding electrodes 4 and 5 disposed on the lower and upper sides of the sheet set, and energization is performed under the application of pressure using the pair of welding electrodes 4 and 5 while the welding conditions are controlled to prescribed conditions. In this manner, the steel sheets are joined together at their interface that later becomes the faying surface 7 between the steel sheets, and the weld described above can thereby be formed (see Fig. 1). When a high strength cold rolled steel sheet and a high strength galvanized steel sheet are disposed so as to overlap each other to thereby form a sheet set, the steel sheets are disposed so as to overlap each other such that the surface of the high strength galvanized steel sheet that includes the galvanized layer faces the high strength cold rolled steel sheet.

In the present invention, the step of energizing the overlapping steel sheets 1 and 2 (the sheet set) held between the welding electrodes 4 and 5 includes a primary energization step and a post-weld tempering heat treatment step. These steps in the invention will be described in detail.

<Primary energization step>

The primary energization step is the step of forming a nugget 3 having the required size by melting the faying surface 7 between the steel sheets 1 and 2 (see Fig. 4). In the primary energization step, the energization is performed at a current value $I_m$ (kA) to form the nugget.

Generally, the diameter of nuggets used for resistance spot welds (welds) of automotive steel sheets is $3.0\sqrt{t}$ to $6.0\sqrt{t}$ (t (mm) is the sheet thickness). In the present invention, the above numerical range is referred to as the "target nugget diameter." In the primary energization step in the invention, no particular limitation is imposed on the energization conditions and pressurizing conditions for forming the nugget 3, so long as the nugget 3 obtained has the target nugget diameter.

From the viewpoint of using the high strength steel sheet for the invention in the overlapping steel sheets and stably forming a nugget 3 having the target nugget diameter on the faying surface 7 between the steel sheets, it is preferable to control the energizing conditions and pressurizing conditions in the primary energization step as follows.

The current value $I_m$ (kA) in the primary energization step is preferably 3.0 kA to 8.0 kA. If the current value $I_m$ is excessively small, the target nugget diameter cannot be obtained stably. If the current value $I_m$ is excessively large, the nugget diameter may be excessively large, or the degree of melting of the steel sheets may be large. In this case, the molten weld splashes out of the sheet gap, so that the nugget diameter may decrease. Because of the above reasons, the current value $I_m$ is 3.0 kA to 8.0 kA. The current value $I_m$ is more preferably 4.5 kA or more and still more preferably 6.0 kA or more. The current value $I_m$ is more preferably 7.5 kA or less and still more preferably 7.3 kA or less. However, the current value $I_m$ may be smaller or larger than the above numerical range so long as the required nugget diameter is obtained.

The energization time $t_m$ (ms) in the primary energization step is preferably 120 ms to 400 ms. Like the current value $I_m$, the energization time $t_m$ is the time required to stably form a nugget 3 having the target nugget diameter. If the energization time $t_m$ is shorter than 120 ms, it is feared that the nugget may be unlikely to form. If the energization time $t_m$ exceeds 400 ms, it is feared that the diameter of the nugget formed may be larger than the target nugget diameter and that the workability may deteriorate. However, so long as the target nugget diameter is obtained, the energization time $t_m$ may be shorter or longer than the above numerical range.

As for the pressurizing conditions in the primary energization step, the welding force is preferably 2.0 kN to 7.0 kN. If the welding force is excessively large, the energization diameter increases, and it is therefore difficult to ensure the nugget diameter. If the welding force is excessively small, the energization diameter is small, and splashes are easily generated. Because of the above reasons, the welding force is 2.0 kN to 7.0 kN. The welding force is more preferably 3.0 kN or more and is more preferably 6.5 kN or less. In some cases, the welding force is limited by the ability of the device used. The welding force may be lower than or higher than the above numerical range, so long as the target nugget diameter can be obtained using the welding force.

<Post-weld tempering heat treatment step>

The post-weld tempering heat treatment step is a post-weld heat treatment step in which the edge portion of the nugget 3 formed in the primary energization step is tempered to thereby improve the toughness of the edge portion of the nugget and control the hardness distribution in the heat-affected zone appropriately. In the post-weld tempering heat treatment step after the primary energization step, the edge portion of the nugget and the heat-affected zone in the vicinity thereof are subjected to a cooling process, a heating process, and a transition process. In particular, in the transition process, downslope energization is performed. In this case, the temperature of the edge portion of the nugget can be gradually reduced, so that the hardness distribution in the heat-affected zone can be easily controlled to the target hardness distribution in the invention. Moreover, an extreme reduction in temperature can be prevented. Therefore, the occurrent of cracking of the weld and the occurrent of defects in the weld can be prevented, and the weld can be produced stably. To obtain these operational effects, it is important to control the welding conditions in the above processes in the post-weld tempering heat treatment step as follows.

[Cooling process]

First, after the primary energization step, cooling is performed to a temperature at which the edge portion of the nugget undergoes martensitic transformation (the cooling process). In the cooling process, to obtain the effect of tempering described later sufficiently, a non-energization state is maintained for a cooling time $t_c$ (ms) shown in formula (9) to cool the weld.

$$800 \leq t_c \quad (9)$$

If the cooling time $t_c$ (ms) in the first cooling process is shorter than 800 ms, the martensitic transformation does not occur sufficiently, and martensite is not formed. In the microstructure in this case, austenite remains present. Therefore, even when the subsequent processes are performed, the austenite remains present, and finally martensite is formed. In this case, the edge portion of the nugget has an embrittled microstructure, and the CTS and TSS are not improved. Therefore, the cooling time $t_c$ (ms) is 800 ms or longer. The cooling time $t_c$ is preferably 850 ms or longer and more preferably 900 ms or longer.

No particular limitation is imposed on the upper limit of the cooling time $t_c$ (ms) in the cooling process. Since the steel sheets used in the invention are steel sheets for automobiles, a long welding time causes a reduction in working efficiency. Therefore, the cooling time $t_c$ (ms) is preferably 2200 ms or shorter and more preferably 2000 ms or shorter.

[Heating process]

After the cooling process, the heating process is performed. In the heating process, to temper the martensite microstructure formed in the cooling process performed after the primary energization step, energization (secondary energization) for heating in an appropriate temperature range is performed. The "appropriate temperature range" is a temperature range in which the microstructure of the edge portion of the nugget and the region therearound (specifically, the first region 61 shown in Fig. 1) is most tempered.

Specifically, in the heating process, the weld is energized at a current value $I_{t1}$ (kA) shown in formula (10) for an energization time $t_{t1}$ (ms) shown in formula (11).

$$I_m < I_{t1} < 2.0 \times I_m \qquad (10)$$

$$0 < t_{t1} \leq 400 \qquad (11)$$

Generally, even when the energization is performed with the current value during the energization after the primary energization step set to be constant, the temperature of the edge portion of the nugget increases as the energization time increases. Therefore, the tempering in the target temperature range is transitory.

Accordingly, in the present invention, it is particularly important to increase the current for the initial energization after the primary energization step (i.e., the energization in the heating process) to thereby increase the temperature of the edge portion of the nugget and the region in the vicinity thereof to the "above-described appropriate temperature," i.e., a temperature in the temperature range equal to or higher than the $Ac_1$ temperature, rapidly in a short time. In this manner, the microstructure of the heat-affected zone in the vicinity of the edge portion of the nugget can be changed to tempered martensite, and the tempering can be performed effectively.

If the current value $I_{t1}$ in this process is lower than the current value $I_m$ in the primary energization step, the heat-affected zone in the vicinity of the edge portion of the nugget cannot be tempered. If the current value $I_{t1}$ in this process is excessively high, the temperature of the heat-affected zone in the vicinity of the edge portion of the nugget exceeds the $Ac_3$ temperature, so that the martensite formed in the cooling process is again transformed to austenite. In this case, martensite is formed by re-quenching in the subsequent process, so that tempered martensite cannot be formed in the heat-affected zone in the vicinity of the edge portion of the nugget. Therefore, the edge portion of the nugget cannot have sufficient toughness.

Because of the reasons described above, the current value $I_{t1}$ (kA) in the heating process is set such that the relation $I_m < I_{t1} < 2.0 \times I_m$ is satisfied. The current value $I_{t1}$ in the heating process is preferably equal to or less than (1.7 $\times I_m$) (kA). The current value $I_{t1}$ in the heating process is preferably equal to or more than (1.1 $\times I_m$) (kA).

As described above, since the temperature is rapidly increased in a short time, the energization time $t_{t1}$ (ms) in the heating process is $0 < t_{t1} \leq 400$. The energization time $t_{t1}$ is preferably 10 ms or longer and more preferably 40 ms or longer. The energization time $t_{t1}$ is preferably 350 ms or shorter and more preferably 250 ms or shorter.

[Transition process]

After the heating process, the transition process is performed in which downslope energization is performed to decrease the temperature gradually. In the transition process, the weld is energized in a downslope manner in which the current value is continuously reduced from a current value $I_{t2}$ (kA) at the start of the energization shown in formula (12) to a current value $I_{t3}$ (kA) at the end of the energization shown in formula (13) for an energization time $t_{t2}$ (ms) shown in formula (14) .

$$I_{t2} < I_{t1} \qquad (12)$$

$$I_{t3} < I_{t2} \qquad (13)$$

$$20 \leq t_{t2} \leq 3500 \qquad (14)$$

The transition process is provided in order to effectively temper the heat-affected zone in the vicinity of the edge portion of the nugget at a temperature just below the $Ac_1$ temperature. To maintain the temperature of the weld, it is necessary that the current value at the start of the downslope energization (the current value $I_{t2}$ (kA) at the start of the energization in the transition process) be lower than the current value $I_{t1}$ (kA) in the heating process. This is because, when the current value $I_{t2}$ at the start of the energization is equal to or higher than the current value $I_{t1}$ in the heating process, the temperature of the heat-affected zone in the vicinity of the edge portion of the nugget can be again increased to a temperature equal to or higher than the $Ac_1$ temperature.

In the present invention, to maintain the temperature just below the $Ac_1$ temperature, the current value at the end of the downslope energization in the transition process (the current value $I_{t3}$ at the end of the energization in the transition process) is also specified. It is necessary that the current value $I_{t3}$ (kA) be less than $I_{t2}$ (kA) to obtain the downslope energization. This is because, when the current value $I_{t3}$ (kA) at the end of the energization is equal to or larger than the current value $I_{t2}$ (kA) at the start of the energization, the heat-affected zone in the vicinity of the edge portion of the nugget again undergoes transformation, and hardened martensite is formed.

Because of the reason described above, the current value $I_{t2}$ (kA) at the start of the energization in the transition process satisfies the relation $I_{t2} < I_{t1}$, and the current value $I_{t3}$ (kA) at the end of the energization in the transition process satisfies the relation $I_{t3} < I_{t2}$. The current value $I_{t2}$ at the start of the energization is preferably equal to or less than ($0.90 \times I_{t1}$) (kA) and is preferably equal to or more than ($0.30 \times I_{t1}$) (kA). The current value $I_{t3}$ at the end of the energization is preferably equal to or less than ($0.90 \times I_{t2}$) (kA) and is preferably equal to or more than ($0.30 \times I_{t2}$) (kA).

The energization time $t_{t2}$ (ms) in the transition process is from 20 ms to 3500 ms inclusive. By providing the energization time $t_{t2}$, the tempering performed can be sufficient to obtain the hardness distribution described above. Moreover, a rapid increase in temperature in the transition process can be avoided. In this case, the temperature of the heat-affected zone in the vicinity of the edge portion of the nugget after the transition process can be maintained constant. Therefore, the energization time $t_{t2}$ is 20 ms or longer. In the heating process, a large current value is necessary in order to increase the temperature. However, since the transition process is a process performed for the purpose of tempering the vicinity of the edge portion of the nugget, the energization time may be long. However, from the viewpoint of the efficiency of the procedure, the energization time $t_{t2}$ is 3500 ms or shorter. The energization time $t_{t2}$ is preferably 2000 ms or shorter and more preferably 1800 ms or shorter. The energization time $t_{t2}$ is preferably 60 ms or longer, more preferably 100 ms or longer, and still more preferably 200 ms or longer.

By performing the resistance spot welding under the welding conditions described above, the weld of the invention can be formed.

Fig. 5 shows an example of an energization pattern in the present invention.

For example, as shown in Fig. 5, in the post-weld tempering heat treatment step after the primary energization step, the current value $I_{t2}$ (kA) at the start of the energization in the transition process is set to be lower than the current value $I_{t1}$ (kA) in the heating process, and the downslope energization may be performed such that the current varies from the current value $I_{t2}$ at the start of the energization to the current value $I_{t3}$ (kA) at the start of the energization.

As described above, in the resistance spot welding method of the invention, the welding conditions in the post-weld tempering heat treatment step are appropriately controlled, and this allows the heat-affected zone to have the soft regions (the first region and the third region) and the hard region (the second region). Specifically, by controlling the hardness distribution in the heat-affected zone appropriately, the toughness of the heat-affected zone can be improved, so that the propagation of cracks into the nugget can be prevented. By improving the toughness of the edge portion of the nugget, stress concentration in the edge portion of the nugget can be relaxed. Therefore, propagation of cracks into the nugget can be more effectively prevented, and the joint strengths, i.e., the CTS and TSS, can be improved.

Specifically, in the present invention, even when the sheet set includes a steel sheet having the steel sheet chemical composition described above as the high strength steel sheet, the welded joint obtained can have a ductile fracture surface, and the occurrent of interface failure is thereby prevented, so that plug failure or partial plug failure in which most of the plug remains can be obtained. Therefore, the CTS of the welded joint obtained can be improved. Moreover, the hardest region (second region) provided in a prescribed region in the heat-affected zone allows the position of TSS failure to be located in the hardest region. In this case, the position of TSS failure is further away from the nugget, so that the TSS of the welded joint obtained can also be improved.

EXAMPLES

The operations and effects of the present invention will be described by way of Examples. However, the present invention is not limited to the following Examples.

Steel sheets (steel sheets A to J) shown in Tables 1 and 2 and having a tensile strength of 780 MPa to 1470 MPa and a thickness of 0.8 to 1.2 mm were used as test specimens. The size of each test specimen was long sides: 150 mm and short sides: 50 mm. Table 1 shows the chemical composition of each of the steel sheets A to J. "-" in Table 1 indicates that the corresponding element is not added intentionally and is intended to include not only the case where the compound is not contained (0%) but also the case where the compound is incidentally contained. "GA steel sheet" shown in Table 2 means the galvannealed steel sheet described above.

In the Examples, as shown in Fig. 4, a servo motor pressurizing-type resistance welding device attached to a C gun and including a DC power source was used to perform resistance spot welding on a sheet set including a plurality of overlapping steel sheets (the lower steel sheet 1 and the upper steel sheet 2 in the example shown in Fig. 4).

First, the obtained steel sheets were disposed so as to overlap each other as shown in Table 2 to form sheet sets. As for "First sheet" and "Second sheet" in "Stacking position of steel sheet" in Table 2, the steel sheets are counted from the lower side.

Next, each of the sheet sets was used to perform resistance spot welding under welding conditions shown in Table 3 to form a nugget 3 having a required size between the sheets, and a resistance spot welded joint was thereby produced. In some sheet sets, three steel sheets were disposed so as to overlap each other. "-" in Table 3 indicates that the corresponding process was not performed.

The other welding conditions were as follows. The welding force during energization was constant and was 3.5 kN in the Examples. A welding electrode 4 on the lower side of the sheet set and a welding electrode 5 on the upper side were each a chromium-copper made DR type electrode having a tip end with a diameter of 6 mm and a radius of curvature of 40 mm. The lower welding electrode 4 and the upper welding electrode 5 were used to control the welding force, and the welding was performed using the DC power source. The nugget was formed such that its diameter was equal to or less than 5.5√t (mm). Here, t (mm) is the sheet thickness.

Each of the obtained resistance spot welded joints was used, and a cross tensile test was performed using a method described below to evaluate the CTS and TSS. Moreover, the hardness of the weld was evaluated using a method described below.

[Evaluation of CTS]

The CTS was evaluated based on the cross tensile test. Each of the produced resistance spot welded joints was used to perform the cross tensile test according to a method specified in JIS Z 3137 to measure the CTS (cross tension strength). When the measured value was JIS grade A (3.4 kN) or higher, the symbol "o" was assigned. When the measured value was lower than the JIS grade A, the symbol "×" was assigned. In the Examples, the evaluation symbol "o" means good, and the evaluation symbol "×" means poor. The evaluation results are shown in Table 4-2.

[Evaluation of TSS]

The TSS was evaluated based on the cross tensile test. Each of the produced resistance spot welded joints was used to perform the cross tensile test according to a method specified in JIS Z 3136 to measure the TSS (tensile shear strength). When the measured value was JIS grade A (10.2 kN) or higher, the symbol "o" was assigned. When the measured value was lower than the JIS grade A, the symbol "×" was assigned. In the Examples, the evaluation symbol "○" means good, and the evaluation symbol "×" means poor. The evaluation results are shown in Table 4-2.

[Evaluation of hardness]

The hardness of the heat-affected zone of each weld was evaluated as follows. One of the resistance spot welded joints produced was cut at a position passing through the center of the nugget formed into a circular shape to thereby obtain a test specimen. The test specimen was subjected to ultrasonic cleaning and embedded in a resin to obtain a sample, and a cross section of the sample taken in its thickness direction was etched using a picric acid solution to thereby prepare a sample. The hardness of the heat-affected zone was measured using a Vickers hardness meter by a method specified in JIS Z 2244. As for the measurement load conditions, an indenter of 300 gf was used to apply a load for 15 seconds.

The "Hardness Hv1 of first region" shown in Table 4-1 was determined as follows. The Vickers hardness was measured at positions 0.2 mm above or below the faying surface between the steel sheets along a straight line parallel to the faying surface at intervals of 0.2 mm. The measurement region was a region from the center of the nugget to the outer edge of the heat-affected zone.

Specifically, as shown in Fig. 1, a region in the heat-affected zone 6 in which the distance L1 (mm) from the first edge 8 to one of the points a and the distance L1 (mm) from the second edge 9 to the other point a satisfy formula (1) above is defined as a first region 61. A sample was prepared such that the first region 61 served as an observation surface. Then the measurement was performed in the first region 61 within the measurement region at intervals of 0.2 mm from the edge portion of the nugget toward the outer edge of the heat-affected zone. The smallest value of the measured values was used as the hardness Hv1 of the first region.

The "Hardness Hv2 of hardest region" shown in Table 4-1 was determined as follows. The measurement of the Vickers hardness was performed in the same manner as above in the same measurement region as above.

Specifically, as shown in Fig. 1, a region in the heat-affected zone 6 in which the distances L2 (mm) from the points a to the respective points b satisfy formula (4) above is defined as a second region 62. A sample was prepared such that the second region 62 served as an observation surface. Then the measurement was performed in the second region 62 within the measurement region at intervals of 0.2 mm from the edge of the first region 61 toward the outer edge of the heat-affected zone. The largest value of the measured values was used as the hardness Hv2 of the second region.

The "Hardness Hv3 of third region" shown in Table 4-1 was determined as follows. The measurement of the Vickers hardness was performed in the same manner as above in the same measurement region as above.

Specifically, as shown in Fig. 1, a region in the heat-affected zone 6 in which the distances L3 (mm) from the points b to the respective points c satisfy formula (6) above is defined as a third region 63. A sample was prepared such that the third region 63 served as an observation surface. Then the measurement was performed in the third region 63 within the measurement region at intervals of 0.2 mm from the edge of the second region 62 toward the outer edge of the heat-affected zone. The average of the measured values was used as the hardness Hv3 of the third region.

As described above, in the present invention, the hardness distribution in the heat-affected zone on the high strength steel sheet side is specified. Therefore, when the high strength steel sheet is used for the steel sheet 2 in the example shown in Fig. 1, the measurement is performed at "positions 0.2 mm above the faying surface between the steel sheets." Alternatively, when the high strength steel sheet is used only for the steel sheet 1 on the lower side, the measurement may be performed at "positions 0.2 mm below the faying surface." Therefore, in Examples (sheet sets k and l) in which the high strength steel sheet in the invention was used only for the lower steel sheet, the hardnesses of the lower steel sheet were measured.

In the Examples, for sheet sets in which high strength steel sheets of the same type were stacked, the hardnesses of the upper steel sheet 2 were measured. For sheet sets in which high strength steel sheets of different types were stacked, the hardnesses of the lower-strength steel sheet were measured.

The hardnesses (Hv1, Hv2, and Hv3) of the above-described regions in the heat-affected zone 6 are shown in Table 4-1. When the hardnesses of these regions satisfied the respective conditions shown in formulas (3), (5), and (7) above, the symbol "o" was assigned. When the hardnesses did not satisfy these conditions, the symbol "×" was assigned. When the ratings for these three regions were each "o," the rating "o (pass)" was placed in the "Hardness rating" column in Table 4-1. In the other cases, the rating "× (fail)" was placed in the "hardness rating" column in Table 4-1.

The hardness (Hvb) of each steel sheet (base material) is a value measured on the steel sheet before welding by a ten-point Vickers test. The hardness (Hvb) of the base material is shown in Table 4-1.

[Table 1]

| Steel sheet | Chemical composition (% by mass) | | | | | | | | | | | | | | | | | Remarks |
|---|---|---|---|---|---|---|---|---|---|---|---|---|---|---|---|---|---|---|
| | C | Si | Mn | P | S | N | O | Cu | Ni | Mo | Cr | Nb | V | Ti | B | Al | Ca | |
| A | 0.20 | 1.3 | 3.0 | 0.01 | 0.001 | 0.003 | 0.010 | - | - | - | - | - | - | - | - | - | - | Steel sheet A |
| B | 0.10 | 0.2 | 4.0 | 0.01 | 0.003 | 0.002 | 0.010 | - | - | - | 0.40 | - | - | - | - | - | - | Steel sheet B |
| C | 0.20 | 1.1 | 2.0 | 0.01 | 0.001 | 0.002 | 0.025 | - | - | - | - | - | 0.05 | - | - | - | 0.005 | Steel sheet C |
| D | 0.13 | 0.9 | 3.5 | 0.01 | 0.001 | 0.005 | 0.010 | 0.20 | 0.30 | - | - | - | - | - | - | 0.03 | - | Steel sheet D |
| E | 0.50 | 0.5 | 1.5 | 0.03 | 0.001 | 0.002 | 0.010 | - | - | - | - | - | - | - | - | - | - | Steel sheet E |
| F | 0.30 | 1.5 | 2.5 | 0.01 | 0.001 | 0.003 | 0.010 | - | - | - | - | - | - | 0.03 | 0.002 | - | - | Steel sheet F |
| G | 0.60 | 0.9 | 1.5 | 0.01 | 0.001 | 0.002 | 0.010 | - | - | 0.20 | - | - | - | - | - | - | - | Steel sheet G |
| H | 0.40 | 1.2 | 2.0 | 0.01 | 0.001 | 0.002 | 0.010 | - | - | - | - | 0.05 | - | - | - | - | - | Steel sheet H |
| I | 0.65 | 2.0 | 1.5 | 0.01 | 0.001 | 0.002 | 0.010 | - | - | - | - | - | - | - | - | - | - | Comparative steel I |
| J | 0.40 | 0.5 | 5.0 | 0.01 | 0.001 | 0.002 | 0.010 | - | - | - | - | - | - | - | - | - | - | Comparative steel J |

[Table 2]

| Sheet set | Stacking position of steel sheet | Steel sheet | Type of steel sheet | Tensile strength | Thickness of steel sheet |
|---|---|---|---|---|---|
| a | First sheet | Cold rolled steel sheet | Steel sheet A | 1180 MPa | 1.2 mm |
| a | Second sheet | Cold rolled steel sheet | Steel sheet A | 1180 MPa | 1.2 mm |
| b | First sheet | Cold rolled steel sheet | Steel sheet B | 780 MPa | 1.2 mm |
| b | Second sheet | Cold rolled steel sheet | Steel sheet B | 780 MPa | 1.2 mm |
| c | First sheet | Cold rolled steel sheet | Steel sheet A | 1180 MPa | 1.2 mm |
| c | Second sheet | Cold rolled steel sheet | Steel sheet B | 780 MPa | 1.2 mm |
| d | First sheet | Cold rolled steel sheet | Steel sheet A | 1180 MPa | 1.2 mm |
| d | Second sheet | Cold rolled steel sheet | Steel sheet C | 1180 MPa | 1.2 mm |
| e | First sheet | Cold rolled steel sheet | Steel sheet A | 1180 MPa | 1.2 mm |
| e | Second sheet | Cold rolled steel sheet | Steel sheet D | 980 MPa | 1.2 mm |
| f | First sheet | Cold rolled steel sheet | Steel sheet E | 1470 MPa | 1.2 mm |
| f | Second sheet | Cold rolled steel sheet | Steel sheet E | 1470 MPa | 1.2 mm |
| 9 | First sheet | Cold rolled steel sheet | Steel sheet F | 1470 MPa | 1.2 mm |
| 9 | Second sheet | Cold rolled steel sheet | Steel sheet F | 1470 MPa | 1.2 mm |
| h | First sheet | Cold rolled steel sheet | Steel sheet G | 1470 MPa | 1.2 mm |
| h | Second sheet | Cold rolled steel sheet | Steel sheet G | 1470 MPa | 1.2 mm |
| i | First sheet | Cold rolled steel sheet | Steel sheet H | 1470 MPa | 1.2 mm |
| i | Second sheet | Cold rolled steel sheet | Steel sheet H | 1470 MPa | 1.2 mm |
| j | First sheet | Cold rolled steel sheet | Comparative steel I | 1470 MPa | 1.2 mm |
| j | Second sheet | Cold rolled steel sheet | Comparative steel I | 1470 MPa | 1.2 mm |

(continued)

| Sheet set | Stacking position of steel sheet | Steel sheet | Type of steel sheet | Tensile strength | Thickness of steel sheet |
|---|---|---|---|---|---|
| k | First sheet | Cold rolled steel sheet | Steel sheet B | 1180 MPa | 1.2 mm |
| | Second sheet | Cold rolled steel sheet | Comparative steel I | 1470 MPa | 1.2 mm |
| l | First sheet | Cold rolled steel sheet | Steel sheet C | 1180 MPa | 1.2 mm |
| | Second sheet | Cold rolled steel sheet | Comparative steel J | 1470 MPa | 1.2 mm |
| m | First sheet | Cold rolled steel sheet | Steel sheet A | 1180 MPa | 0.8 mm |
| | Second sheet | Cold rolled steel sheet | Steel sheet A | 1180 MPa | 0.8 mm |
| | Third sheet | Cold rolled steel sheet | Steel sheet A | 1180 MPa | 0.8 mm |
| n | First sheet | GA steel sheet | Steel sheet A | 1180 MPa | 1.2 mm |
| | Second sheet | GA steel sheet | Steel sheet A | 1180 MPa | 1.2 mm |
| o | First sheet | GA steel sheet | Steel sheet A | 1180 MPa | 1.2 mm |
| | Second sheet | GA steel sheet | Steel sheet C | 1180 MPa | 1.2 mm |
| p | First sheet | GA steel sheet | Steel sheet A | 1180 MPa | 1.2 mm |
| | Second sheet | GA steel sheet | Steel sheet D | 980 MPa | 1.2 mm |

[Table 3]

| | | Primary energization step | | Cooling process | Heating process | | Transition process | | | Remarks |
|---|---|---|---|---|---|---|---|---|---|---|
| Welding number | Sheet set | Current value $I_m$ (kA) | Energization time $t_m$ (ms) | Cooling time $t_c$ (ms) | Current value $I_{t1}$ (kA) | Energization time $t_{t1}$ (ms) | Current value at start of energization $I_{t2}$ (kA) | Current value at end of energization $I_{t3}$ (kA) | Energization time tt2 (ms) | |
| 1 | a | 6.5 | 280 | - | - | - | - | - | - | Comparative Example |
| 2 | a | 6.5 | 280 | 1200 | 6.8 | 200 | 4.0 | 3.0 | 1600 | Inventive Example |
| 3 | a | 6.5 | 280 | 1500 | 13.5 | 150 | 6.5 | 0.0 | 300 | Comparative Example |
| 4 | b | 6.5 | 280 | 1400 | 6.7 | 350 | 5.0 | 4.0 | 25 | Inventive Example |
| 5 | b | 6.5 | 250 | 1100 | 7.5 | 180 | 7.4 | 5.0 | 400 | Inventive Example |
| 6 | c | 6.5 | 250 | 900 | 8.0 | 100 | 5.0 | 3.0 | 500 | Inventive Example |
| 7 | c | 6.7 | 250 | 860 | 11.0 | 50 | 4.5 | 4.0 | 1600 | Inventive Example |
| 8 | d | 6.7 | 280 | 900 | 8.8 | 100 | 9.0 | 6.0 | 1000 | Comparative Example |
| 10 | e | 6.5 | 280 | 900 | 8.1 | 140 | 8.0 | 6.0 | 3600 | Comparative Example |
| 11 | e | 6.5 | 280 | 800 | 7.0 | 20 | 4.0 | 1.0 | 1500 | Inventive Example |
| 12 | e | 6.5 | 280 | 1000 | 7.8 | 160 | 2.0 | 1.5 | 600 | Inventive Example |
| 13 | f | 6.7 | 300 | 1400 | 8.0 | 500 | 4.0 | 2.0 | 1500 | Comparative Example |

Post-weld tempering heat treatment step

(continued)

| Welding number | Primary energization step | | | Post-weld tempering heat treatment step | | | | | | Remarks |
| | Sheet set | Current value $I_m$ (kA) | Energization time $t_m$ (ms) | Cooling process | Heating process | | Transition process | | | |
| | | | | Cooling time $t_c$ (ms) | Current value $I_{t1}$ (kA) | Energization time $t_{t1}$ (ms) | Current value at start of energization $I_{t2}$ (kA) | Current value at end of energization $I_{t3}$ (kA) | Energization time tt2 (ms) | |
| 14 | f | 6.5 | 280 | 1600 | 7.4 | 160 | 6.1 | 3.0 | 1100 | Inventive Example |
| 15 | g | 6.5 | 280 | 1000 | 7.6 | 120 | 5.5 | 6.5 | 1600 | Comparative Example |
| 16 | g | 6.5 | 280 | 800 | 7.4 | 180 | 4.6 | 4.0 | 900 | Inventive Example |
| 17 | h | 6.5 | 280 | 1600 | 7.5 | 160 | 5.0 | 3.0 | 260 | Inventive Example |
| 18 | h | 6.5 | 280 | 1600 | 7.7 | 470 | 5.0 | 4.0 | 1400 | Comparative Example |
| 19 | j | 6.5 | 280 | 1400 | 7.9 | 200 | 6.5 | 4.0 | 1000 | Comparative Example |
| 20 | i | 6.5 | 280 | 2000 | 10.0 | 160 | 4.0 | 2.0 | 200 | Inventive Example |
| 21 | i | 6.5 | 280 | 1000 | 7.5 | 120 | 4.0 | 3.5 | 500 | Inventive Example |
| 22 | i | 6.3 | 300 | 1000 | 5.5 | 100 | 2.0 | 7.0 | 1600 | Comparative Example |
| 23 | k | 6.5 | 280 | 1800 | 7.2 | 140 | 3.8 | 3.0 | 700 | Inventive Example |
| 24 | k | 6.5 | 280 | 700 | 7.4 | 200 | 3.4 | 2.9 | 1500 | Comparative Example |
| 25 | k | 6.5 | 280 | 1600 | 13.5 | 140 | 4.5 | 4.0 | 1200 | Comparative Example |

(continued)

| Welding number | Sheet set | Primary energization step | | Cooling process | Heating process | | Transition process | | | Remarks |
| | | Current value $I_m$ (kA) | Energization time $t_m$ (ms) | Cooling time $t_c$ (ms) | Current value $I_{t1}$ (kA) | Energization time $t_{t1}$ (ms) | Current value at start of energization $I_{t2}$ (kA) | Current value at end of energization $I_{t3}$ (kA) | Energization time tt2 (ms) | |
|---|---|---|---|---|---|---|---|---|---|---|
| 26 | l | 6.5 | 280 | 1600 | 7.8 | 180 | 4.0 | 3.0 | 1000 | Inventive Example |
| 27 | l | 6.7 | 250 | 1800 | 7.0 | 120 | 4.2 | 4.0 | 1300 | Inventive Example |
| 28 | m | 6.5 | 280 | 900 | 7.5 | 120 | 5.5 | 3.5 | 500 | Inventive Example |
| 29 | n | 6.5 | 280 | 900 | 7.5 | 160 | 8.0 | 3.0 | 15 | Comparative Example |
| 30 | n | 6.5 | 280 | 2000 | 8.5 | 150 | 4.5 | 3.2 | 600 | Inventive Example |
| 31 | o | 6.5 | 280 | 900 | 8.0 | 120 | 5.0 | 4.1 | 800 | Inventive Example |
| 32 | P | 6.5 | 280 | 1600 | 7.0 | 140 | 5.0 | 3.0 | 700 | Inventive Example |
| 33 | a | 4.5 | 400 | 900 | 6.5 | 60 | 6.0 | 3.0 | 800 | Inventive Example |
| 34 | 9 | 8.1 | 120 | 1000 | 8.2 | 100 | 5.2 | 4.0 | 1000 | Inventive Example |
| 35 | i | 7.8 | 280 | 2000 | 9.0 | 40 | 4.0 | 2.0 | 1200 | Inventive Example |

[Table 4-1]

| Welding number | Sheet set | Nugget | | First region | | | | Second region | | | | Third region | | | | | Hardness Hvb of base material |
|---|---|---|---|---|---|---|---|---|---|---|---|---|---|---|---|---|---|
| | | Length D of line segment X (mm) | Hardness Hmw of nugget | Hardness Hv1 of first region | Value of right hand side of formula (3) | Judgment by formula (3) | Area fraction of TM (%) | Hardness Hv2 of second region | Hardness ratio [Hv2 / Hv1] | Judgment by formula (5) | Total area fraction of M + F (%) | Hardness Hv3 of third region | Hardness ratio [Hv3 / Hv2] | Judgment by formula (7) | Area fraction of F (%) | Total area fraction of M + TM (%) | |
| 1 | a | 5.5 | 468 | 452 | 365 | × | 0 | 477 | 106 | × | 100 | 362 | 0.76 | ○ | 65 | 35 | 381 |
| 2 | a | 5.5 | 468 | 340 | 365 | ○ | 100 | 400 | 1.18 | ○ | 75 | 330 | 0.83 | ○ | 10 | 90 | 381 |
| 3 | a | 5.5 | 468 | 442 | 365 | × | 0 | 471 | 107 | × | 100 | 372 | 0.79 | ○ | 10 | 90 | 381 |
| 4 | b | 5.5 | 382 | 270 | 298 | ○ | 100 | 311 | 1.15 | ○ | 65 | 278 | 0.89 | ○ | 20 | 80 | 321 |
| 5 | b | 5.5 | 382 | 265 | 298 | ○ | 100 | 321 | 1.21 | ○ | 70 | 281 | 0.88 | ○ | 10 | 90 | 321 |
| 6 | c | 5.5 | 425 | 311 | 332 | ○ | 95 | 355 | 114 | ○ | 45 | 299 | 0.84 | ○ | 40 | 60 | 355 |
| 7 | c | 5.7 | 425 | 298 | 332 | ○ | 91 | 361 | 121 | ○ | 70 | 285 | 0.79 | ○ | 10 | 90 | 355 |
| 8 | d | 5.7 | 468 | 443 | 365 | × | 0 | 432 | 0.98 | × | 95 | 321 | 0.74 | ○ | 10 | 90 | 372 |
| 10 | e | 5.5 | 438 | 413 | 342 | × | 0 | 462 | 112 | ○ | 77 | 398 | 0.86 | ○ | 20 | 80 | 389 |
| 11 | e | 5.5 | 438 | 310 | 342 | ○ | 88 | 451 | 1.45 | ○ | 62 | 389 | 0.86 | ○ | 10 | 90 | 389 |
| 12 | e | 5.5 | 438 | 302 | 342 | ○ | 100 | 440 | 1.46 | ○ | 42 | 385 | 0.88 | ○ | 10 | 90 | 389 |
| 13 | f | 5.5 | 702 | 540 | 548 | ○ | 100 | 615 | 114 | ○ | 55 | 558 | 0.91 | × | 60 | 40 | 682 |
| 14 | f | 5.5 | 702 | 480 | 548 | ○ | 97 | 608 | 1.27 | ○ | 78 | 474 | 0.78 | ○ | 10 | 90 | 682 |
| 15 | g | 5.5 | 552 | 502 | 431 | × | 2 | 500 | 1.00 | × | 92 | 300 | 0.60 | ○ | 10 | 90 | 540 |
| 16 | g | 5.6 | 552 | 380 | 431 | ○ | 72 | 456 | 120 | ○ | 90 | 320 | 0.70 | ○ | 10 | 90 | 540 |
| 17 | h | 5.5 | 767 | 411 | 598 | ○ | 100 | 513 | 1.25 | ○ | 78 | 422 | 0.82 | ○ | 10 | 90 | 742 |
| 18 | h | 5.5 | 767 | 479 | 598 | ○ | 98 | 531 | 111 | ○ | 69 | 495 | 0.93 | × | 55 | 45 | 742 |
| 19 | j | 5.5 | 795 | 600 | 620 | ○ | 100 | 758 | 1.26 | ○ | 78 | 699 | 0.92 | × | 50 | 50 | 763 |
| 20 | i | 5.5 | 630 | 444 | 491 | ○ | 99 | 500 | 1.13 | ○ | 64 | 408 | 0.82 | ○ | 10 | 90 | 612 |
| 21 | i | 5.5 | 630 | 425 | 491 | ○ | 100 | 480 | 1.13 | ○ | 81 | 401 | 0.84 | ○ | 10 | 90 | 612 |

(continued)

| Welding number | Sheet set | Nugget | | Heat-affected zone | | | | | | | | | | | | | | Hardness Hvb of base material |
|---|---|---|---|---|---|---|---|---|---|---|---|---|---|---|---|---|---|---|
| | | Length D of line segment X (mm) | Hardness Hmw of nugget | First region | | | | Second region | | | | Third region | | | | | | |
| | | | | Hard-ness Hv1 of first re-gion | Value of right hand side of formula (3) | Judgment by formula (3) | Area fraction of TM (%) | Hardness Hv2 of second region | Hard-ness ratio [Hv2 / Hv1] | Judg-ment by formula (5) | Total area fraction of M + F (%) | Hard-ness Hv3 of third re-gion | Hard-ness ratio [Hv3 / Hv2] | Judg-ment by formula (7) | Area fraction of F (%) | Total area fraction of M + TM (%) | |
| 22 | i | 5.4 | 630 | 602 | 491 | × | 0 | 511 | 0.85 | × | 92 | 532 | 104 | × | 50 | 50 | 612 |
| 23 | k | 5.5 | 611 | 410 | 477 | ○ | 100 | 465 | 1.13 | ○ | 68 | 382 | 0.82 | ○ | 10 | 90 | 576 |
| 24 | k | 5.5 | 611 | 594 | 477 | × | 0 | 497 | 0.84 | × | 94 | 489 | 0.98 | × | 60 | 40 | 576 |
| 25 | k | 5.5 | 611 | 589 | 477 | × | 0 | 599 | 102 | × | 93 | 576 | 0.96 | × | 60 | 40 | 576 |
| 26 | l | 5.5 | 552 | 351 | 431 | ○ | 100 | 392 | 112 | ○ | 51 | 322 | 0.82 | ○ | 10 | 90 | 525 |
| 27 | l | 5.5 | 552 | 342 | 431 | ○ | 100 | 380 | 1.11 | ○ | 75 | 336 | 0.88 | ○ | 10 | 90 | 525 |
| 28 | m | 5.5 | 468 | 308 | 365 | ○ | 52 | 350 | 114 | ○ | 58 | 299 | 0.85 | ○ | 10 | 90 | 378 |
| 29 | n | 5.5 | 468 | 372 | 381 | ○ | 95 | 425 | 114 | ○ | 68 | 412 | 0.97 | × | 60 | 40 | 375 |
| 30 | n | 5.5 | 468 | 321 | 365 | ○ | 88 | 411 | 1.28 | ○ | 72 | 302 | 0.73 | ○ | 10 | 90 | 375 |
| 31 | o | 5.5 | 438 | 400 | 413 | ○ | 75 | 447 | 112 | ○ | 61 | 372 | 0.83 | ○ | 10 | 90 | 408 |
| 32 | p | 5.5 | 552 | 403 | 431 | ○ | 94 | 467 | 116 | ○ | 67 | 333 | 0.71 | ○ | 10 | 90 | 532 |
| 33 | a | 4.3 | 468 | 341 | 365 | ○ | 78 | 400 | 118 | ○ | 78 | 330 | 0.83 | ○ | 10 | 90 | 381 |
| 34 | g | 6.1 | 552 | 333 | 431 | ○ | 98 | 456 | 120 | ○ | 82 | 320 | 0.70 | ○ | 10 | 90 | 540 |
| 35 | i | 5.9 | 630 | 391 | 491 | ○ | 100 | 602 | 1.11 | ○ | 69 | 332 | 0.55 | ○ | 10 | 90 | 612 |

* Formula (3): $Hv1 \leq 0.78 \times Hmw$
* Formula (5): $Hv2 \geq 1.10 \times Hv1$
* Formula (7): $Hv3 \leq 0.90 \times Hv2$
* TM: tempered martensite, M: martensite, F: ferrite

[Table 4-2]

| Welding number | Evaluation results | | | | Remarks |
|---|---|---|---|---|---|
| | CTS results (kN) | Judgment on CTS | TSS results (kN) | Judgment on TSS | |
| 1 | 2.1 | × | 5.8 | × | Comparative Example |
| 2 | 5.5 | ○ | 11.4 | ○ | Inventive Example |
| 3 | 2.3 | × | 5.4 | × | Comparative Example |
| 4 | 7.7 | ○ | 12.9 | ○ | Inventive Example |
| 5 | 8.3 | ○ | 14.4 | ○ | Inventive Example |
| 6 | 6.8 | ○ | 11.9 | ○ | Inventive Example |
| 7 | 7.1 | ○ | 12.2 | ○ | Inventive Example |
| 8 | 2.1 | × | 5.9 | × | Comparative Example |
| 10 | 2.5 | × | 7.7 | × | Comparative Example |
| 11 | 6.7 | ○ | 13.5 | ○ | Inventive Example |
| 12 | 5.5 | ○ | 12.1 | ○ | Inventive Example |
| 13 | 0.8 | × | 5.1 | × | Comparative Example |
| 14 | 4.5 | ○ | 11.2 | ○ | Inventive Example |
| 15 | 1.7 | × | 5.1 | × | Comparative Example |
| 16 | 7.2 | ○ | 13.2 | ○ | Inventive Example |
| 17 | 6.1 | ○ | 10.9 | ○ | Inventive Example |
| 18 | 1.2 | × | 5.5 | × | Comparative Example |
| 19 | 2.0 | × | 4.9 | × | Comparative Example |
| 20 | 5.5 | ○ | 11.2 | ○ | Inventive Example |
| 21 | 6.5 | ○ | 11.9 | ○ | Inventive Example |
| 22 | 1.1 | × | 4.9 | × | Comparative Example |
| 23 | 7.3 | ○ | 15.5 | ○ | Inventive Example |
| 24 | 2.1 | × | 5.3 | × | Comparative Example |
| 25 | 2.2 | × | 6.6 | × | Comparative Example |
| 26 | 6.5 | ○ | 12.7 | ○ | Inventive Example |
| 27 | 7.1 | ○ | 13.2 | ○ | Inventive Example |
| 28 | 7.8 | ○ | 15.4 | ○ | Inventive Example |
| 29 | 1.7 | × | 5.6 | × | Comparative Example |
| 30 | 6.5 | ○ | 12.4 | ○ | Inventive Example |
| 31 | 8.2 | ○ | 15.2 | ○ | Inventive Example |
| 32 | 6.8 | ○ | 13.5 | ○ | Inventive Example |
| 33 | 3.7 | ○ | 10.5 | ○ | Inventive Example |
| 34 | 7.7 | ○ | 14.5 | ○ | Inventive Example |
| 35 | 6.9 | ○ | 13.4 | ○ | Inventive Example |

As can be seen in Tables 4-1 and 4-2, in each of the Inventive Examples, a good welded joint having excellent joint strengths (CTS and TSS) was obtained. However, in each of the Comparative Examples, a good welded joint was not obtained.

Reference Signs List

| | |
|---|---|
| 1, 2, 10 | steel sheet |
| 3 | nugget |
| 4, 5 | welding electrode |
| 6 | heat-affected zone |
| 7 | steel sheet faying surface |
| 8 | first edge |
| 9 | second edge |
| 11 | resistance spot welded joint |
| 61 | first region |
| 62 | second region |
| 63 | third region |

**Claims**

1. A resistance spot welded joint having a resistance spot weld formed by resistance-spot-welding two or more overlapping steel sheets including at least one high strength steel sheet,

   wherein the high strength steel sheet has a chemical composition comprising, in mass %,
   C: 0.05 to 0.6%,
   Si: 0.1 to 2.0%,
   Mn: 1.5 to 4.0%,
   P: 0.10% or less,
   S: 0.003% or less,
   N: 0.001 to 0.010%, and
   O: 0.03% or less,
   with the balance being Fe and incidental impurities,
   wherein, in the resistance spot weld, two points at which a boundary of a nugget intersects a faying surface between two of the two or more overlapping steel sheets are defined as a first edge and a second edge, wherein a length of a line segment X connecting the first edge and the second edge is denoted as D (mm), wherein positions located on an extension of the line segment X within a heat-affected zone are denoted as points a, points b, and points c,
   wherein a region in the heat-affected zone in which a distance L1 (mm) from the first edge to a first one of the points a and a distance L1 (mm) from the second edge to a second one of the points a satisfy a relation with the length D (mm) of the line segment X that is represented by formula (1) is defined as a first region, wherein a hardness Hv1 of the first region and a hardness Hmv of martensite in the nugget as a whole that is computed using formulas (2) and (8) satisfy a relation of formula (3),
   wherein a region in the heat-affected zone in which distances L2 (mm) from the points a to the respective points b and the length D (mm) of the line segment X satisfy a relation of formula (4) is defined as a second region, wherein a hardness Hv2 of the second region and the hardness Hv1 of the first region satisfy a relation of formula (5),
   wherein a region in the heat-affected zone in which distances L3 (mm) from the points b to the respective points c and the length D (mm) of the line segment X satisfy a relation of formula (6) is defined as a third region, and
   wherein a hardness Hv3 of the third region and the hardness Hv2 of the second region satisfy a relation of formula (7),

[Math. 1]

$$0 < L1 \le 0.13 \times D \qquad (1)$$

$$Hmw = 884 \times Cw \times (1 - 0.3 \times Cw^2) + 294 \qquad (2)$$

$$Hv1 \le 0.78 \times Hmw \qquad (3)$$

$$0.13 \times D < L2 \le 0.15 \times D \qquad (4)$$

$$Hv2 \ge 1.10 \times Hv1 \qquad (5)$$

$$0.15 \times D < L3 \le 0.25 \times D \qquad (6)$$

$$Hv3 \le 0.90 \times Hv2 \qquad (7)$$

$$Cw = \frac{\sum_{i=n} C_i V_i}{\sum_{i=n} V_i} \quad \cdots \quad (8)$$

wherein, in formulas (2) and (8),

Cw (% by mass): a content of C per unit volume of the steel sheets in the nugget,

$C_i$ (% by mass): a content of C in one of the overlapping steel sheets,

$V_i$ (mm$^2$): a melted area of one of the steel sheets in a region surrounded by the boundary of the nugget and the line segment X in a thicknesswise cross section passing through a center of the nugget, and

n: the number of overlapping steel sheets,

provided that, when a gap is present between the two of the two or more steel sheets at the faying surface, the first edge and the second edge are two points at which the boundary of the nugget intersects a straight line Y that is located midway in the gap and that is parallel to the faying surface.

2. The resistance spot welded joint according to claim 1, wherein the chemical composition of the high strength steel sheet further comprises, in mass %, one or two or more selected from

Al: 2.0% or less,
B: 0.0001 to 0.005%,
Ca: 0.005% or less,
Cr: 1.0% or less,
Cu: 0.005 to 1.0%,
Ni: 1.0% or less,
Mo: 0.005 to 1.0%,
Ti: 0.003 to 0.20%,
V: 0.005 to 0.50%, and
Nb: 0.003 to 0.100%.

3. The resistance spot welded joint according to claim 1 or 2, wherein the high strength steel sheet includes a coated layer on a surface thereof.

4. A resistance spot welding method for the resistance spot welded joint according to claim 1, the resistance spot weld being formed by holding, between a pair of welding electrodes, a sheet set including the two or more overlapping steel sheets including the at least one high strength steel sheet and then energizing the sheet set under application of pressure,

wherein the energizing includes a primary energization step and a post-weld tempering heat treatment step,

wherein, in the primary energization step, the sheet set is energized at a current value $I_m$ (kA) to form the nugget,

wherein the post-weld tempering heat treatment step includes the following processes performed in the following order:

a cooling process in which a non-energization state is maintained for a cooling time $t_c$ (ms) shown in formula (9);

a heating process in which the resistance spot weld is energized at a current value $I_{t1}$ (kA) shown in formula (10) for an energization time $t_{t1}$ (ms) shown in formula (11); and

a transition process in which the resistance spot weld is energized in a downslope manner in which a current value is continuously reduced from a current value $I_{t2}$ (kA) at a start of the energization shown in formula (12) to a current value $I_{t3}$ (kA) at an end of the energization shown in formula (13) for an energization time $t_{t2}$ (ms) shown in formula (14),

$$800 \leq t_c, \qquad (9)$$

$$I_m < I_{t1} < 2.0 \times I_m, \qquad (10)$$

$$0 < t_{t1} \leq 400, \qquad (11)$$

$$I_{t2} < I_{t1}, \qquad (12)$$

$$I_{t3} < I_{t2}, \qquad (13)$$

$$20 \leq t_{t2} \leq 3500. \qquad (14)$$

5. The resistance spot welding method for the resistance spot welded joint according to claim 4, wherein the chemical composition of the high strength steel sheet further comprises, in mass %, one or two or more selected from

Al: 2.0% or less,
B: 0.0001 to 0.005%,
Ca: 0.005% or less,
Cr: 1.0% or less,
Cu: 0.005 to 1.0%,
Ni: 1.0% or less,
Mo: 0.005 to 1.0%,
Ti: 0.003 to 0.20%,
V: 0.005 to 0.50%, and
Nb: 0.003 to 0.100%.

6. The resistance spot welding method for the resistance spot welded joint according to claim 4 or 5, wherein the high strength steel sheet includes a coated layer on a surface thereof.

FIG. 1

FIG. 2

FIG. 3

FIG. 4

FIG. 5

## INTERNATIONAL SEARCH REPORT

| International application No. |
| --- |
| **PCT/JP2022/036460** |

**A.    CLASSIFICATION OF SUBJECT MATTER**

*B23K 11/16*(2006.01)i; *B23K 11/11*(2006.01)i; *B23K 11/24*(2006.01)i; *C21D 9/50*(2006.01)i; *C22C 38/00*(2006.01)i; *C22C 38/58*(2006.01)i

FI:    B23K11/16; B23K11/11 540; B23K11/24 315; C21D9/50 101B; C22C38/00 301B; C22C38/58

According to International Patent Classification (IPC) or to both national classification and IPC

**B.    FIELDS SEARCHED**

Minimum documentation searched (classification system followed by classification symbols)

B23K11/16; B23K11/11; B23K11/24; C21D9/50; C22C38/00; C22C38/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2008-229720 A (KOBE STEEL, LTD.) 02 October 2008 (2008-10-02)<br>claims 1-5, fig. 2-5, 7 | 1-6 |
| A | WO 2014/171495 A1 (NIPPON STEEL & SUMITOMO METAL CORP.) 23 October 2014 (2014-10-23)<br>claims 1-2, fig. 1-4 | 1-6 |
| A | WO 2020/036198 A1 (JFE STEEL CORP.) 20 February 2020 (2020-02-20)<br>claims 1-3, fig. 1-5 | 1-6 |
| A | WO 2020/240961 A1 (JFE STEEL CORP.) 03 December 2020 (2020-12-03)<br>claims 1-7, fig. 1-4 | 1-6 |

☐ Further documents are listed in the continuation of Box C.          ☑ See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **28 November 2022** | **13 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 371 688 A1

**INTERNATIONAL SEARCH REPORT**
**Information on patent family members**

International application No.

**PCT/JP2022/036460**

| Patent document cited in search report | | | Publication date (day/month/year) | Patent family member(s) | | | Publication date (day/month/year) |
|---|---|---|---|---|---|---|---|
| JP | 2008-229720 | A | 02 October 2008 | (Family: none) | | | |
| WO | 2014/171495 | A1 | 23 October 2014 | US claims 1-2, fig. 1-4 | 2016/0067814 | A1 | |
| | | | | EP | 2987581 | A1 | |
| | | | | CN | 105142847 | A | |
| | | | | KR 10-2015-0137104 | | A | |
| WO | 2020/036198 | A1 | 20 February 2020 | CN claims 1-3, fig. 1-5 | 112584959 | A | |
| | | | | KR 10-2021-0033486 | | A | |
| WO | 2020/240961 | A1 | 03 December 2020 | US claims 1-20, fig. 1-4 | 2022/0228233 | A1 | |
| | | | | EP | 3978178 | A1 | |
| | | | | KR 10-2021-0154239 | | A | |
| | | | | CN | 113891773 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5713147 B
- JP 5895430 B
- JP 5043236 B